# FASCICULE DE BREVET EUROPEEN

(11) **EP 1 496 238 B1**
(45) Date de publication et mention de la délivrance du brevet: **30.05.2007**
(21) Numéro de dépôt: 04291739.3
(22) Date de dépôt: 08.07.2004
(51) Int. Cl.: F02K 1/48, F02K 3/02, F02K 1/38

(54) **Dispositif de réduction de bruit de jet d'une turbomachine**
Vorrichtung zur Minderung des Strömungslärms eines Triebwerkes
Apparatus for the reduction of the jetflow noise of a turboengine

(30) Priorité: 09.07.2003 FR 0308383
(43) Date de publication de la demande: 12.01.2005
(73) Titulaire: SNECMA, 75015 Paris (FR)
(72) Inventeur: Prouteau, Jackie, 94440 Villecresnes (FR); Miroudot, Frédéric, 77550 Moissy-Cramayel (FR)
(74) Mandataire: David, Alain

(56) Documents cités:
- EP-A- 1 160 439
- WO-A-00/40851
- US-A- 4 401 269
- US-A- 4 576 002
- US-A- 6 082 635
- US-A1- 2002 178 711

## Description

La présente invention se rapporte au domaine général des tuyères équipant les turbomachines. Elle vise plus particulièrement à réduire le bruit de jet engendré en sortie des tuyères à flux séparés de turbomachines d'avions, notamment pendant les phases de décollage de ces avions.

Les tuyères équipant les turbomachines d'avions civils se composent généralement d'un corps central entouré d'un capot primaire qui forment entre eux un premier canal annulaire pour l'écoulement d'un flux primaire. Un capot secondaire entoure le capot primaire pour former un second canal annulaire pour l'écoulement d'un flux secondaire. L'ensemble de ces éléments de la tuyère est généralement de forme axisymétrique.

La présente invention vise un dispositif permettant de réduire le bruit de jet en sortie de ces tuyères, notamment pendant les phases de décollage au cours desquelles la vitesse d'éjection des flux primaire et secondaire est transsonique (c'est à dire de l'ordre de 0,9 Mach) sans pour autant en dégrader les performances aérodynamiques.

Afin de réduire le bruit de jet engendré en sortie des tuyères, il est connu de favoriser le mélange entre les flux primaire et secondaire issus de la turbomachine. Par exemple, il a été proposé de munir le capot primaire de la tuyère de lobes qui permettent d'obtenir un cisaillement radial entre les flux primaire et secondaire afin de favoriser le mélange entre ces flux. Cependant, ce type de tuyère à lobes n'a que peu d'effet sur la réduction du bruit de jet et n'est pas adapté à des vitesses transsoniques d'écoulement des flux. En effet, les pentes des lobes sont trop importantes pour des telles vitesses ce qui induit des décollements des flux qui dégradent les performances aérodynamiques de la tuyère.

On connaît aussi le brevet EP 1,160,439 qui prévoit de munir les capots de la tuyère de chevrons afin de favoriser le mélange entre les flux primaire et secondaire. Bien que réductrice du bruit de jet, l'implantation de chevrons a également tendance à dégrader les performances aérodynamiques de la tuyère. Le document WO 00/40851 A décrit aussi une tuyère représentant l'état de la technique.

### Objet et résumé de l'invention

La présente invention vise donc à pallier de tels inconvénients en proposant un dispositif pour tuyère de turbomachine permettant de réduire notablement le bruit de jet, notamment à des vitesses transsoniques d'écoulement des flux, sans pour autant dégrader les performances aérodynamiques de la tuyère.

A cet effet, il est prévu un dispositif de réduction du bruit de jet d'une turbomachine selon la revendication 1.

La géométrie particulière des ondulations qui sont à la fois vrillées et tridimensionnelles et présentent un double effet contrarotatif permet en accroissant le mélange entre les flux d'obtenir une réduction efficace du bruit de jet sans dégradation des performances aérodynamiques. En effet, cette géométrie permet de générer un cisaillement tangentiel entre les flux qui s'additionne au cisaillement radial afin d'augmenter le mélange entre les flux.

La présente invention vise également une tuyère de turbomachine comportant un capot primaire s'étendant selon un axe longitudinal de la tuyère, un corps central disposé concentriquement à l'intérieur dudit capot primaire, et un capot secondaire entourant concentriquement le capot primaire, et dans laquelle le capot primaire et/ou le capot secondaire comporte un dispositif de réduction du bruit de jet.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1A et 1B sont des vues en perspective d'un dispositif de réduction du bruit de jet selon l'invention équipant une tuyère de turbomachine ;
- les figures 2A et 2B sont des vues illustrant les effets de cisaillements et le double effet contrarotatif engendrés par un dispositif de réduction du bruit de jet selon l'invention ;
- les figures 3A, 3B et 3C sont des vues en coupe longitudinale de dispositifs de réduction du bruit de jet selon d'autres variantes de l'invention ; et
- la figure 4 est une vue en perspective d'une tuyère de turbomachine équipée d'un dispositif de réduction du bruit de jet selon une variante de l'invention.

### Description détaillée d'un mode de réalisation

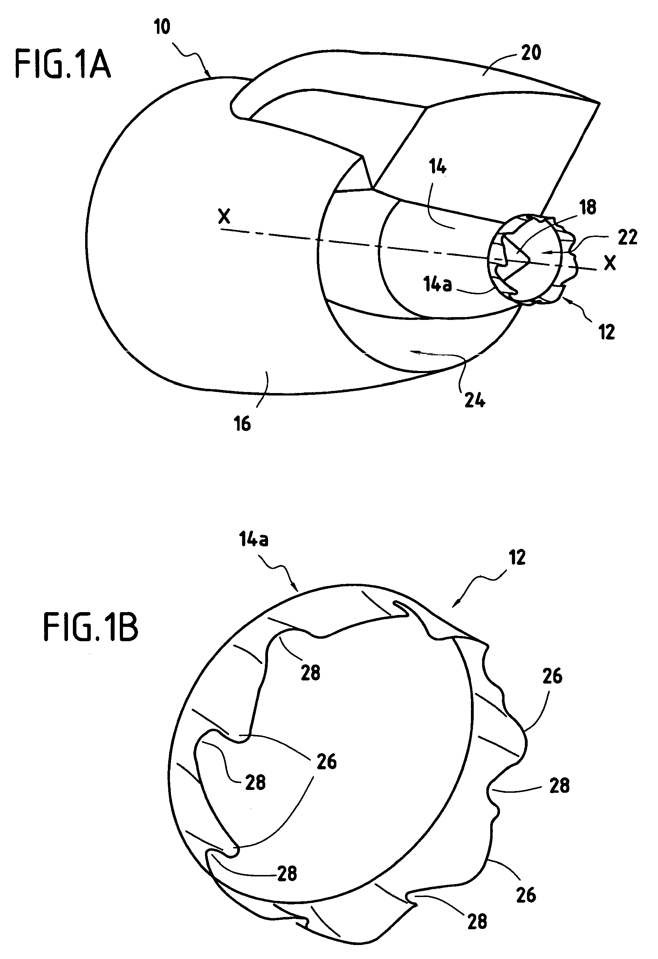

La figure 1A représente, en perspective, une tuyère 10 de turbomachine équipée d'un dispositif de réduction du bruit de jet 12 selon l'invention. La tuyère 10, de forme axisymétrique par rapport à un axe longitudinal X-X de la turbomachine, est typiquement formée d'un capot primaire 14, d'un capot secondaire 16 et d'un corps central 18. Le capot primaire 14, de forme sensiblement cylindrique ou tronconique, s'étend selon l'axe longitudinal X-X. Le corps central 18 est disposé concentriquement à l'intérieur du capot primaire 14 et se termine par une partie sensiblement conique.

Sur la figure 1, l'extrémité aval 14a du capot primaire 14 s'étend au-delà de la partie conique du corps central 18. Le capot secondaire 16, également de forme sensiblement cylindrique ou tronconique, entoure concentriquement le capot primaire 14. La tuyère ainsi définie est fixée sous une aile d'avion (non représentée sur les figures) par intermédiaire d'un pylône de support 20.

L'assemblage concentrique des éléments de la tuyère 10 permet de définir : d'une part, entre le capot primaire 14 et le corps central 18, un premier passage annulaire 22 pour l'écoulement d'un flux gazeux issu de la turbomachine (appelé flux primaire), et d'autre part, entre les capots primaire 14 et secondaire 16, un second passage annulaire 24 pour l'écoulement de l'air issu de la turbomachine (appelé flux secondaire). Les flux gazeux s'écoulant de ces deux passages annulaires 22, 24 se mélangent entre eux à l'extrémité aval 14a du capot primaire 14.

On notera que, sur la figure 1A, le corps central 18 de la tuyère 10 est de type interne, c'est à dire que l'extrémité aval 14a du capot primaire 14 s'étend longitudinalement au-delà du bord de fuite du corps central. Toutefois, le dispositif de réduction du bruit de jet selon l'invention peut également s'appliquer à une tuyère de type externe dont le bord de fuite du corps central s'étend au-delà de l'extrémité aval du capot primaire.

Selon l'invention, la tuyère 10 comporte un dispositif de réduction du bruit de jet 12 formé d'une pluralité d'ondulations 26 disposées dans le prolongement de l'extrémité aval 14a du capot primaire 14 et d'une pluralité d'échancrures 28 disposées entre deux ondulations successives de la pluralité d'ondulations de façon à générer un cisaillement radial et un cisaillement tangentiel entre les flux primaire et secondaire issus de la turbomachine (figure 1B).

Les ondulations 26 formées à l'extrémité aval 14a du capot primaire 14 s'étendent le long de l'axe longitudinal X-X de la turbomachine. Sur l'exemple de réalisation illustré par la figure 1B, elles sont chacune vrillées entre leurs extrémités amont et aval de façon à s'étendre radialement vers l'intérieur et vers l'extérieur par rapport à l'extrémité aval 14a du capot primaire. Les échancrures 28 se présentent sous la forme d'entailles ou de découpes qui s'étendent sensiblement longitudinalement entre deux ondulations 26 successives.

Les ondulations 26 et les échancrures 28 permettent ainsi de générer un cisaillement radial et un cisaillement tangentiel entre les flux primaire et secondaire afin d'augmenter le mélange entre les flux et donc de réduire le bruit de jet. Par cisaillement radial, il faut entendre que celui-ci s'effectue selon une direction radiale par rapport à la forme sensiblement cylindrique du capot primaire. De même, par cisaillement tangentiel, il faut comprendre que celui-ci est opéré selon une direction tangentielle par rapport à la forme sensiblement cylindrique du capot primaire.

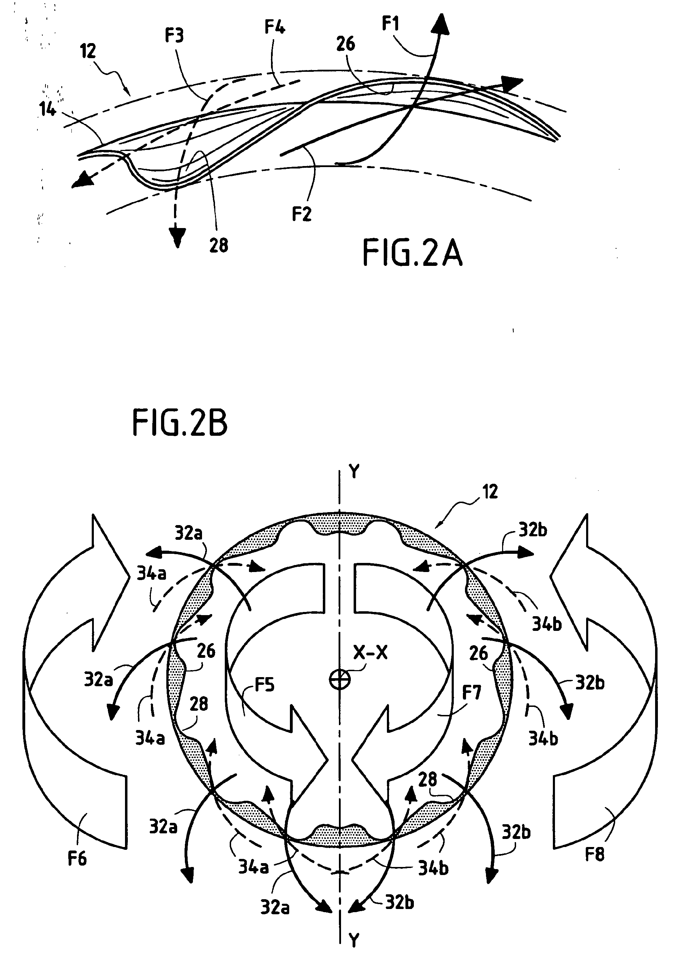

La figure 2A illustre bien ce phénomène de cisaillements radial et tangentiel. Sur cette figure, on a représenté une ondulation 26 et une échancrure 28 du dispositif de réduction du bruit de jet 12 selon l'invention appliqué à un capot primaire 14 de tuyère. Les flèches en traits pleins illustrent la direction d'écoulement du flux interne au dispositif au voisinage de l'ondulation 26 et de l'échancrure 28, tandis que les flèches en traits pointillés schématisent la direction d'écoulement du flux externe au dispositif au voisinage de ces mêmes ondulation et échancrure.

Au niveau de l'ondulation 26, le flux interne s'écoulant au voisinage de celle-ci est dirigé, pour être mélangé au flux externe, à la fois selon une direction radiale (flèche F1) et selon une direction tangentielle (flèche F2). Les directions radiale et tangentielle d'écoulement du flux interne sont dues au fait que l'ondulation est vrillée radialement vers l'extérieur par rapport au capot primaire 14.

De même, au niveau de l'échancrure 28, le flux externe s'écoulant au voisinage de celle-ci est dirigé, pour être mélangé au flux interne, à la fois selon une direction radiale (flèche F3) et selon une direction tangentielle (flèche F4). Ainsi, il s'opère, à l'extrémité aval du capot primaire entre les flux interne et externe, un cisaillement radial entre les écoulements schématisés par les flèches F1 et F3 et un cisaillement tangentiel entre les écoulements schématisés par les flèches F2 et F4.

Selon une caractéristique avantageuse de l'invention, la pluralité d'ondulations 26 et la pluralité d'échancrures 28 du dispositif de réduction du bruit de jet 12 sont symétriques par rapport à au moins un axe perpendiculaire à l'axe longitudinal X-X de la turbomachine de façon à générer un double effet contrarotatif entre les flux interne et externe au dispositif de réduction du bruit de jet.

Ainsi, sur la figure 2B, les ondulations 26 et les échancrures 28 du capot primaire sont symétriques par rapport à un axe transversal Y-Y. Cette symétrie a pour conséquence de générer un double effet contrarotatif entre les flux interne et externe.

En effet, concernant la partie du dispositif 12 située « à gauche » de l'axe transversal Y-Y, le flux interne se mélange au flux externe dans la direction illustrée par les flèches 32a. Cette direction de mélange créée, pour le flux interne, une rotation générale F5 dans le sens inverse de rotation des aiguilles d'une montre. De même, le flux externe se mélange au flux interne dans la direction illustrée par les flèches 34a. Cette direction de mélange engendre, pour le flux externe, une rotation générale F6 dans le sens de rotation des aiguilles d'une montre. Dans cette moitié gauche du dispositif de réduction du bruit de jet 12, les flux interne et externe sont donc contrarotatifs.

Concernant l'autre partie du dispositif, le flux interne se mélange au flux externe dans la direction illustrée par les flèches 32b. Cette direction de mélange créée, pour le flux interne, une rotation générale F7 dans le sens de rotation des aiguilles d'une montre. Quant au flux externe, celui-ci se mélange au flux interne dans la direction des flèches 34b. Cette direction de mélange génère pour celui-ci une rotation générale F8 dans le sens inverse de rotation des aiguilles d'une montre, c'est à dire dans le sens inverse de rotation F7 du flux interne. Ces rotations inverses entre les flux interne et externe dans la seconde moitié du dispositif de réduction du bruit de jet 12 constituent un second effet contrarotatif.

Par ailleurs, on pourrait imaginer que les ondulations et les échancrures du dispositif de réduction du bruit de jet présentent une pluralité de symétries par rapport à plusieurs axes perpendiculaires à l'axe longitudinal X-X de la tuyère de façon à multiplier les doubles effets contrarotatifs entre les flux interne et externe.

De plus, la forme et le nombre des ondulations et des échancrures du dispositif de réduction de bruit selon l'invention peuvent varier. Notamment, la hauteur de pénétration dans les flux interne et externe des ondulations n'est pas limitée.

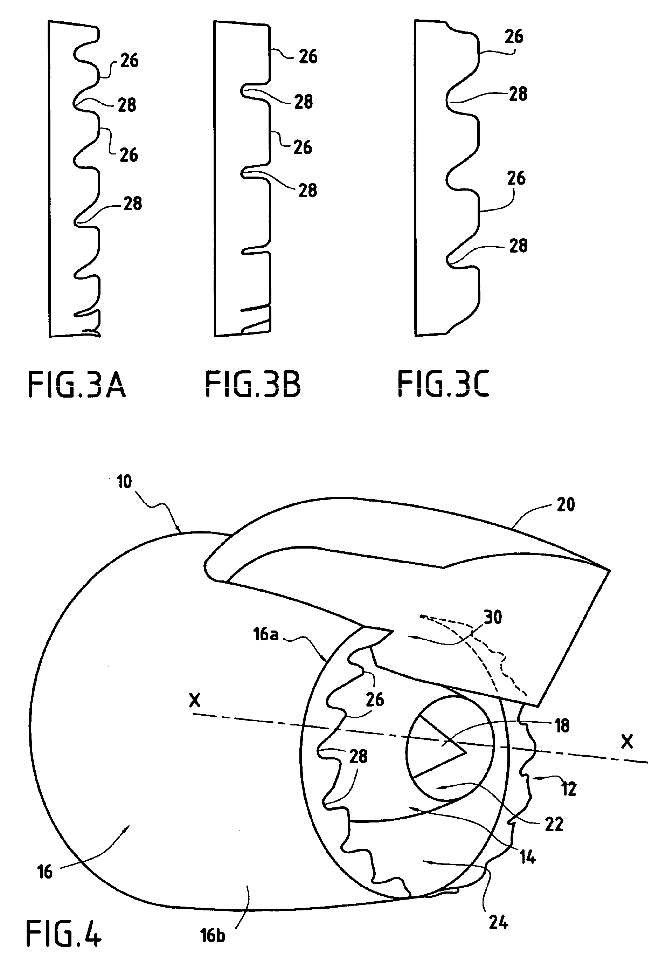

Les figures 3A, 3B et 3C représentent, en coupe longitudinale, d'autres exemples de réalisation du dispositif de réduction du bruit de jet selon l'invention. De manière générale, on notera que pour ne pas dégrader les performances aérodynamiques, les ondulations 26 et les échancrures 28 du dispositif de réduction du bruit de jet selon l'invention doivent garder des formes douces et arrondies et ne pas pénétrer de façon trop importante dans les flux interne et externe.

Sur la figure 1A, le dispositif de réduction du bruit de jet selon l'invention est appliqué sur le capot primaire 14 de la tuyère 10. Toutefois, on peut imaginer une implantation différente. La figure 4 illustre ainsi une tuyère 10 de turbomachine dont le capot secondaire 16 est muni, à son extrémité aval 16a, d'un dispositif de réduction du bruit de jet 12.

De même que pour l'application au capot primaire, ce dispositif se compose d'une pluralité d'ondulations 26 disposées dans le prolongement de l'extrémité aval 16a du capot secondaire 16 et d'une pluralité d'échancrures 28 disposées entre deux ondulations successives. On notera toutefois qu'il est prévu de ménager, au niveau de la zone de fixation du pylône 20 sur le capot secondaire, un intervalle 30 ne présentant ni ondulations ni échancrures afin de permettre la fixation du pylône 20.

Selon le même principe que précédemment, ces ondulations 26 et échancrures 28 permettent de générer un cisaillement radial et un cisaillement tangentiel entre le flux secondaire issu de la turbomachine et le flux d'air s'écoulant le long de la paroi externe 16b du capot secondaire 16 afin d'augmenter le mélange entre les flux et donc de réduire le bruit de jet.

Par ailleurs, selon encore une autre variante d'application de l'invention (non représentée sur les figures), un dispositif de réduction du bruit de jet peut être implanté à la fois sur le capot primaire et sur le capot secondaire. Dans ce cas, ces dispositifs permettent de générer des cisaillements radiaux et des cisaillements tangentiels à la fois entre le flux primaire et le flux secondaire et entre le flux secondaire et le flux d'air s'écoulant le long de la paroi externe du capot secondaire.

## Revendications

1. Dispositif de réduction du bruit de jet d'une turbomachine, ladite turbomachine ayant un axe longitudinal (X-X) et comportant une tuyère (10) sensiblement cylindrique s'étendant selon ledit axe longitudinal de la turbomachine et ayant une extrémité aval pour le mélange de flux gazeux internes et externes à ladite tuyère, ledit dispositif comportant une pluralité d'ondulations (26) vrillées disposées dans le prolongement de l'extrémité aval de la tuyère (10) et une pluralité d'échancrures (28) disposées entre deux ondulations successives de ladite pluralité d'ondulations (26) de façon à générer un cisaillement radial et un cisaillement tangentiel entre lesdits flux gazeux, **caractérisé en ce que** ladite pluralité d'ondulations et ladite pluralité d'échancrures sont symétriques par rapport à au moins un axe (Y-Y) perpendiculaire audit axe longitudinal de la turbomachine de façon à générer un double effet contrarotatif entre lesdits flux gazeux, et **en ce que** chaque ondulation (26) et échancrure (28) est dissymétrique par rapport à un plan radial passant par l'axe lo,gitudinal (X-X) et qui est médian à ladite ondulation ou ladite échancrure considérée.

2. Tuyère (10) de turbomachine comportant :
un capot primaire (14) s'étendant selon un axe longitudinal (X-X) de ladite tuyère,
un corps central (18) disposé concentriquement à l'intérieur dudit capot primaire (16) afin de définir, entre ledit capot primaire et ledit corps central, un premier canal annulaire (22) pour l'écoulement d'un flux primaire, et
un capot secondaire (16) entourant concentriquement ledit capot primaire (14) afin de définir un second canal annulaire (24) pour l'écoulement d'un flux secondaire,
**caractérisé en ce que** ledit capot primaire (14) comporte, à une extrémité aval (14a), un dispositif de réduction de bruit (12) selon la revendication 1 de façon à générer un cisaillement radial et un cisaillement tangentiel entre lesdits flux primaire et secondaire.

3. Tuyère (10) de turbomachine comportant :
un capot primaire (14) s'étendant selon un axe longitudinal (X-X) de ladite tuyère,
un corps central (18) disposé concentriquement à l'intérieur dudit capot primaire (14) afin de définir, entre ledit capot primaire et ledit corps central, un premier canal annulaire (22) pour l'écoulement d'un flux primaire, et
un capot secondaire (16) entourant concentriquement ledit capot primaire (16) afin de définir un second canal annulaire (24) pour l'écoulement d'un flux secondaire,
**caractérisé en ce que** ledit capot secondaire (16) comporte, à son extrémité aval (16a), un dispositif de réduction de bruit (12) selon la revendication 1 de façon à générer un cisaillement radial et un cisaillement tangentiel entre ledit flux secondaire et un flux d'air s'écoulant le long d'une paroi externe (16b) dudit capot secondaire (16).

4. Tuyère (10) de turbomachine comportant :
un capot primaire (14) s'étendant selon un axe longitudinal (X-X) de ladite tuyère,
un corps central (18) disposé concentriquement à l'intérieur dudit capot primaire (16) afin de définir, entre ledit capot primaire et ledit corps central, un premier canal annulaire (22) pour l'écoulement d'un flux primaire, et
un capot secondaire (16) entourant concentriquement ledit capot primaire (14) afin de définir un second canal annulaire (24) pour l'écoulement d'un flux secondaire,
**caractérisé en ce que** ledit capot primaire (14) et ledit capot secondaire (16) comportent chacun à une extrémité aval (14a, 16a) un dispositif de réduction de bruit (12) selon la revendication 1 de façon à générer un cisaillement radial et un cisaillement tangentiel entre lesdits flux primaire et secondaire et entre ledit flux secondaire et un flux d'air s'écoulant le long d'une paroi externe (16b) dudit capot secondaire (16).

## Claims

1. A device for reducing the jet noise of a turbomachine, said turbomachine having a longitudinal axis (X-X) and a substantially cylindrical nozzle (10) extending along said longitudinal axis of the turbomachine, having a downstream end for mixing the flows of gas inside and outside said nozzle, said device comprising a plurality of corrugations (26) disposed to extend the downstream end of the nozzle (10), and a plurality of notches (28) disposed between pairs of successive corrugations in said plurality of corrugations (26) so as to generate radial shear and tangential shear between said two flows of gas, the device being **characterised in that** said plurality of corrugations and said plurality of notches are symmetrical relative to at least one axis (Y-Y) perpendicular to said longitudinal axis of the turbomachine so as to generate a dual counter-rotating effect between said gas flows, and **in that** each corrugation (26) and each notch (28) is asymmetrical relative to a radial plane that goes through the longitudinal axis (X-X) and that is median to said corrugation or to said notch under consideration.

2. A turbomachine nozzle (10) comprising:
a primary cowl (14) extending along a longitudinal axis (X-X) of said nozzle;
a central body (18) disposed concentrically inside said primary cowl (16) to define between said primary cowl and said central body a first annular channel (22) for a primary flow; and
a secondary cowl (16) concentrically surrounding said primary cowl (14) in order to define a second annular channel (24) for a secondary flow,
the nozzle being **characterised in that** said primary cowl (14) includes a noise reduction device (12) according to claim 1 at a downstream end (14a) thereof so as to generate radial shear and tangential shear between said primary and secondary flows.

3. A turbomachine nozzle (10) comprising:
a primary cowl (14) extending along a longitudinal axis (X-X) of said nozzle;
a central body (18) disposed concentrically inside said primary cowl (14) to define between said primary cowl and said central body a first annular channel (22) for a primary flow; and
a secondary cowl (16) concentrically surrounding said primary cowl (14) in order to define a second annular channel (24) for a secondary flow,
the nozzle being **characterised in that** said secondary cowl (16) includes a noise reduction device (12) according to claim 1 at its downstream end (16a) so as to generate radial shear and tangential shear between said secondary flow and a flow of air flowing along the outside wall (16b) of said secondary cowl (16).

4. A turbomachine nozzle (10) comprising:
a primary cowl (14) extending along a longitudinal axis (X-X) of said nozzle;
a central body (18) disposed concentrically inside said primary cowl (16) to define between said primary cowl and said central body a first annular channel (22) for a primary flow; and
a secondary cowl (16) concentrically surrounding said primary cowl (14) in order to define a second annular channel (24) for a secondary flow,
the nozzle being **characterised in that** each of said primary cowl (14) and said secondary cowl (16) comprises a respective noise reduction device (12) according to claim 1 at a downstream end thereof (14a, 16a) so as to generate radial shear and tangential shear between said primary and secondary flows, and between said secondary flow and a flow of air flowing along an outside wall (16b) of said secondary cowl (16).

## Patentansprüche

1. Vorrichtung zur Verringerung des Strahlgeräuschs einer Turbomaschine, wobei die Turbomaschine eine Längsachse (X-X) hat und eine im wesentlichen zylindrische Düse (10) umfaßt, die sich entlang der Längsachse der Turbomaschine erstreckt und die ein stromabwärtiges Ende für das Mischen von innerhalb und außerhalb der Düse auftretenden Gasströmen aufweist, wobei die Vorrichtung eine Vielzahl von gekräuselten Wellen (26), die in der Verlängerung des stromabwärtigen Endes der Düse (10) angeordnet sind, sowie eine Vielzahl von Einbuchtungen (28) umfaßt, die zwischen zwei aufeinanderfolgenden Wellen der Vielzahl von Wellen (26) angeordnet sind, so daß eine radiale Scherung und eine tangentiale Scherung zwischen den genannten Gasströmen erzeugt wird, **dadurch gekennzeichnet, daß** die Vielzahl von Wellen und die Vielzahl von Einbuchtungen in bezug auf wenigstens eine zu der Längsachse der Turbomaschine senkrechte Achse (Y-Y) symmetrisch sind, so daß ein doppelter gegenläufiger Effekt zwischen den Gasströmen erzeugt wird, und daß jede Welle (26) und Einbuchtung (28) in bezug auf eine Radialebene, die durch die Längsachse (X-X) verläuft und die zu der betrachteten Welle oder der betrachteten Einbuchtung median ist, asymmetrisch ist.

2. Düse (10) einer Turbomaschine, umfassend:
eine primäre Verkleidung (14), die sich entlang einer Längsachse (X-X) der Düse erstreckt,
einen mittleren Körper (18), der innerhalb der primären Verkleidung (14) konzentrisch angeordnet ist, um zwischen der primären Verkleidung und dem mittleren Körper einen ersten ringförmigen Kanal (22) für die Strömung eines primären Stroms zu definieren, und
eine sekundäre Verkleidung (16), welche die primäre Verkleidung (14) konzentrisch umgibt, um einen zweiten ringförmigen Kanal (24) für die Strömung eines sekundären Stroms zu definieren,
**dadurch gekennzeichnet, daß** die primäre Verkleidung (14) an einem stromabwärtigen Ende (14a) eine Vorrichtung zur Geräuschverringerung (12) nach Anspruch 1 umfaßt, so daß eine radiale Scherung und eine tangentiale Scherung zwischen dem primären und dem sekundären Strom erzeugt werden.

3. Düse (10) einer Turbomaschine, umfassend:
eine primäre Verkleidung (14), die sich entlang einer Längsachse (X-X) der Düse erstreckt,
einen mittleren Körper (18), der innerhalb der primären Verkleidung (14) konzentrisch angeordnet ist, um zwischen der primären Verkleidung und dem mittleren Körper einen ersten ringförmigen Kanal (22) für die Strömung eines primären Stroms zu definieren, und
eine sekundäre Verkleidung (16), welche die primäre Verkleidung (14) konzentrisch umgibt, um einen zweiten ringförmigen Kanal (24) für die Strömung eines sekundären Stroms zu definieren,
**dadurch gekennzeichnet, daß** die sekundäre Verkleidung (16) an ihrem stromabwärtigen Ende (16a) eine Vorrichtung zur Geräuschverringerung (12) nach Anspruch 1 umfaßt, so daß eine radiale Scherung und eine tangentiale Scherung zwischen dem sekundären Strom und einem entlang einer Außenwand (16b) der sekundären Verkleidung (16) strömenden Luftstrom erzeugt werden.

4. Düse (10) einer Turbomaschine, umfassend:
eine primäre Verkleidung (14), die sich entlang einer Längsachse (X-X) der Düse erstreckt,
einen mittleren Körper (18), der innerhalb der primären Verkleidung (14) konzentrisch angeordnet ist, um zwischen der primären Verkleidung und dem mittleren Körper einen ersten ringförmigen Kanal (22) für die Strömung eines primären Stroms zu definieren, und
eine sekundäre Verkleidung (16), welche die primäre Verkleidung (14) konzentrisch umgibt, um einen zweiten ringförmigen Kanal (24) für die Strömung eines sekundären Stroms zu definieren,
**dadurch gekennzeichnet, daß** die primäre Verkleidung (14) und die sekundäre Verkleidung (16) jeweils an einem stromabwärtigen Ende (14a, 16a) eine Vorrichtung zur Geräuschverringerung (12) nach Anspruch 1 umfassen, so daß eine radiale Scherung und eine tangentiale Scherung zwischen dem primären Strom und dem sekundären Strom sowie zwischen dem sekundären Strom und einem entlang einer Außenwand (16b) der sekundären Verkleidung (16) strömenden Luftstrom erzeugt werden.
